# NEW EUROPEAN PATENT SPECIFICATION

(11) **EP 1 619 827 B2**
(45) Date of publication and mention of the opposition decision: **23.05.2012**
(45) Mention of the grant of the patent: 18.06.2008
(21) Application number: 04715869.6
(22) Date of filing: 01.03.2004
(51) Int. Cl.: H04M 11/06, H04L 5/02, H04L 5/14, H04L 12/28

(54) **METHOD OF IMPLEMENTING LONG DISTANCE VERY-HIGH-RATE DIGITAL SUBSCRIBER LINE**
VERFAHREN ZUR IMPLEMENTIERUNG EINES SEHR HOCHRATIGEN DIGITALEN TEILNEHMERANSCHLUSSES FÜR GROSSE DISTANZEN
PROCEDE DE MISE EN OEUVRE D'UNE LIGNE LONGUE DISTANCE A TRES HAUT DEBIT POUR ABONNES NUMERIQUES

(30) Priority: 23.04.2003 CN 03128406
(43) Date of publication of application: 25.01.2006
(73) Proprietor: Huawei Technologies Co., Ltd., Longgang District, Shenzhen Guangdong 518129 (CN)
(72) Inventor: YANG, Tao, Shenzhen, Guangdong 518129 (CN)
(74) Representative: Körber, Martin Hans
(86) International application number: PCT/CN2004/000155
(87) International publication number: WO 2004/095774

(56) References cited:
- US-A1- 2002 041 572
- US-A1- 2003 072 359
- US-A1- 2003 072 359
- "Transmission and Multiplexing (TM); Access transmission systems on metallic access cables; Very high speed Digital Subscriber Line (VDSL); Part 2: Transceiver specification; ETSI TS 101 270-2" ETSI STANDARDS, EUROPEAN TELECOMMUNICATIONS STANDARDS INSTITUTE, SOPHIA-ANTIPO, FR, vol. TM-6, no. V111, February 2001 (2001-02), XP014015938 ISSN: 0000-0001
- NAVA M D ET AL: "A SHORT OVERVIEW OF THE VDSL SYSTEM REQUIREMENTS" IEEE COMMUNICATIONS MAGAZINE, IEEE SERVICE CENTER,NEW YORK, NY, US, vol. 40, no. 12, December 2002 (2002-12), pages 82-90, XP001141288 ISSN: 0163-6804

## Description

### Field of the Invention

The present invention relates to the technology of very-high-rate digital subscriber line (VDSL), particularly to a method of implementing long range very-high-rate digital subscriber line (LRVDSL).

### Background of the Invention

According to US 2002/041572 A1 most homes and businesses are connected to telephone networks using twisted pair copper wires. These wires were used to carry data traffic in the analogue voice band. With the advancement of Digital Subscriber Line (DSL) technologies, the transfer of data over the higher frequencies in the twisted pair copper wires becomes prevalent. The greatest advantage of the DSL is that it enables data to be exchanged over the twisted pair copper wires at much higher speeds than conventional modems and analogue lines (see, for instance, Recommendations G.992.1, G.992.2 and G.994.1 published by the International Telecommunication Union for more information).

Further, according to US 2002/041572, the term xDSL refers to the DSL technologies including the most familiar Asymmetric Digital Subscriber Line (ADSL) as well as several variations thereof including High Speed Digital Subscriber Line (QIDSL) and VDSL.

According to US 2002/041572 the recent higher speed xDSL technologies use different spectral allocations than prior xDSL technologies such as G.992.1 and G.992.2. For instance, the direction of transmission may be upstream or downstream, and the ability to transmit and the direction of transmission must be selected in a handshaking procedure, which however was not involved in previous xDSL technologies. Since VDSL technologies may have different spectral allocations than previous xDSL technologies, and some spectrum is not allocated to be strictly upstream or downstream only, new handshaking methods shall be developed to handshake VDSL technologies while still retaining spectral and communication compatibilities with those for existing xDSL technologies.

In view of this, a handshaking communication system has been presented in US 2002/041572 which allows new xDSL technologies, such as VDSL, to handshake while retaining backward compatibility with previous handshaking methods such as G.994.1, where there are provided frequencies specifically designed to be spectrally compatible with VDSL and existing xDSL technologies. In connection with such a system, a novel method is presented for using these frequencies to retain backward compatibility, and parameters are also provided for the handshaking messages that are specific to VDSL technologies.

In particular for VDSL, a digital subscriber line technology that implements very-high-rate access through twisted pair lines, one most important difference of VDSL from other xDSL technologies is "very-high-rate". Within a certain transmission range, VDSL can even provide 52Mbps downlink access rate. Current VDSL technology is mainly implemented based upon QAM or DMT modulation schemes.

Due to its feature of very high transmission rate, VDSL technology receives more and more extensive attention. Many telecom equipment suppliers have developed DSLAM devices based on VDSL technology. However, VDSL technology only supports a transmission range below 1.5km due to its intrinsic weakness. In practice, the transmission range is further reduced due to introductions of parallel lines and bridge taps at the ends of the circuits during the construction of the lines. The steady transmission range is generally about 1,000m, which brings limitation to the application of VDSL technology.

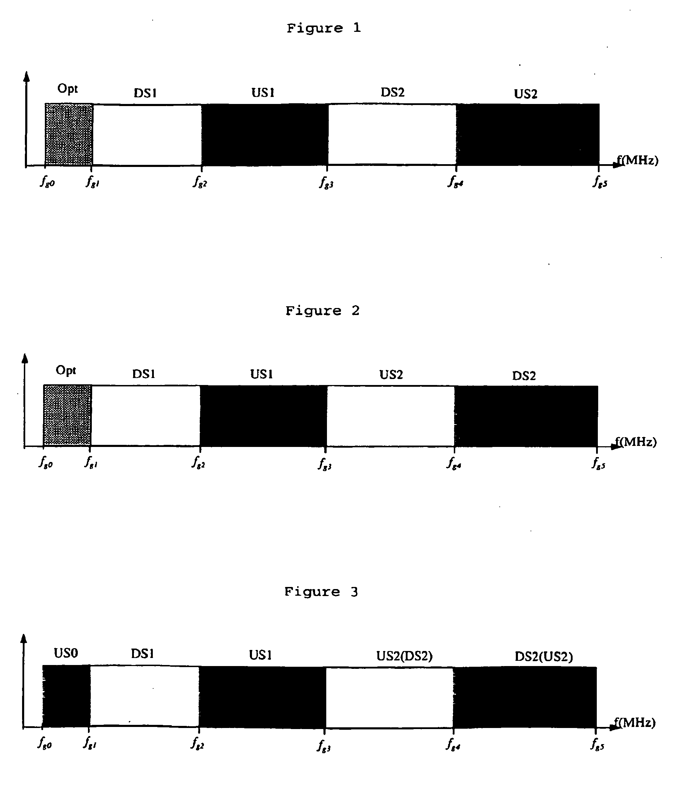

VDSL technology is derived from the Asymmetric Digital Subscriber Line (ADSL) technology. VDSL can be regarded as a natural evolvement of ADSL, but it provides higher rate than ADSL, i.e. the downlink rate is up to 52Mpbs, and the uplink rate is up to 6.4Mpbs. The essential reason is that VDSL technology occupies a wider analog bandwidth than ADSL: the analog bandwidth of ADSL is 25KHz∼1.1MHz, while the analog bandwidth of VDSL is 25KHz∼12MHz. The analog bandwidth of VDSL is 10 times that of ADSL, and also the frequency range of VDSL completely cover that of ADSL. The allocation of frequency bands specified in ITU-TG. 993.1 is shown in Fig.1. The following table shows several schemes for the application of frequency bands:

| Frequency Band Schemes /MHz | f_{g0} | f_{g1} | f_{g2} | f_{g3} | f_{g4} | f_{g5} |
|---|---|---|---|---|---|---|
| Scheme 1 (998) | 0.025 | 0.138 | 3.75 | 5.2 | 8.5 | 12.0 |
| Scheme 2 (997) | 0.025 | 0.138 | 3.0 | 5.1 | 7.05 | 12.0 |
| Scheme 3 (Fx) | 0.025 | 0.138 | 2.5 | 3.75 | Fx | 12 |

Particularly, Scheme 1 is for USA, Japan, and some regions in Europe; Scheme 2 is the primary scheme in Europe; and Scheme 3 has no specific purpose (it was initially defined in Sweden, but was abandoned by ETSI in 2001). Fig.2 shows the allocation of frequency bands defined in the industry standard YD/T 1239-2002 established in P.R.China in 2002. The schemes for the application of frequency bands are shown in the following table:

| Frequency Band Scheme/MHz | f_{g0} | f_{g1} | f_{g2} | f_{g3} | f_{g4} | f_{g5} |
|---|---|---|---|---|---|---|
| Scheme 1 | 0.025 | .0.138 | 3.75 | 5.2 | 8.5 | 12.0 |
| Scheme 2 | N/A | 0.9 | 3.75 | 5.2 | 8.5 | 12.0 |

Particularly, Scheme 1 is for the application in which VDSL and ADSL services are not in one and same cable. When one and same line pair doesn't provide ISDN service, the frequency band between f_{g0} and f_{g1} is optional. During initialization of a system , a negotiation shall be made to determine whether the devices use the frequency band and whether the frequency band is used for an uplink or a downlink. Scheme 2 is for the application in which VDSL and ADSL services are in one and same cable. Further, the frequency band DS2 (fg4-fg5) is optional; in practice, the uplink frequency bands US1 and US2 can be combined into a single uplink frequency band US for use.

Neither G. 993.1 nor YD/T 1239-2002 provides any clear definition for the analog frequency band of. 25KHz~138KHz. That is, in a particular country or region, the frequency band of 25KHz~138KHz can be defined for an uplink, a downlink or a G.994.1 handshaking signal as needed.

Due to the fact that existing VDSL technology has not efficiently utilized the analog frequency band of 25KHz-138KHz, it is unable to activate a remote Modem in the case of a very long line, because the higher the frequency of a signal carrier is, the higher the attenuation of a signal along the twisted pair lines is. A high-frequency signal is attenuated continuously as its transmission distance increases along the line, causing the modem at the opposite end unable to retrieve signals correctly from noise to perform demodulation, and thus a VDSL link cannot be set up. ADSL technology supports a longer transmission range because it employs a lower frequency band (25KHz∼1.1MHz) for transmission in which the signal attenuation along the twisted pair lines is much smaller.

US 2003/072359 A1 relates to a method and an apparatus for digital subscriber line transfer.

The limitation on the transmission range severely reduces the application scope of VDSL technology. Consequently, VDSL technology can only be used as a supplementary access means to ADSL technology. Current VDSL technology finds itself inaccessible to the great market share of the transmission range above 1.5km.

US6535551 B1 discloses a DSL communication system including a DSL transmission unit at a central office (DTU-C) and a DSL transmission unit at a remote location (DTU-R). DTU-C and DTU-R synchronize or train at a first data rate. After synchronization, DTU-C and/or DTU-R measure the line quality at the first data rate. A second data rate is then selected based on the line quality measurements. DTU-C may then initiate a rate change request, according to which DTU-C and DTU-R may resynchronize at the second rate.

### Summary of the Invention

In view of the drawback of the short transmission range in the existing VDSL technology, the present invention provides a method of implementing long range VDSL (LRVDSL).

The method of the present invention comprises steps of:
defining an only uplink frequency band among VDSL frequency bands, and combining the uplink frequency band with at least one rest frequency band into long range VDSL frequency band modes,
performing a training in the long range VDSL frequency band modes based upon actual conditions of a line between an office end and a subscriber end; and
setting up a link between the office end and the subscriber end at a maximum transmission rate which succeeds in the training, wherein
the long range VDSL frequency band modes comprise a two-frequency-band mode, a symmetric three-frequency-band mode, an asymmetric three-frequency-band mode and a four-frequency-band mode.

The method is characterized in that a frequency band of 0.025∼0.138MHz is defined as the uplink frequency band and the training is performed in an increment-by-frequency way and increment-by-rate manner, wherein the increment-by-frequency-band and increment-by-rate training between the office end and the subscriber end comprises steps of:
a. performing the training in the two-frequency-band mode between the office end and the subscriber end;
b. if the training fails, returning to step a, otherwise judging whether parameters indicative of quality of the line meet the subscriber's demand; if the subscriber's demand is met, terminating the training, otherwise going to step c;
c. performing the training in the three-frequency-band mode between the office end and the subscriber end;
d. if the training succeeds, judging whether the parameters indicative of quality of the line meet the subscriber's demand; if the subscriber's demand is met, terminating the training, otherwise going to step e;
e. performing the training in the four-frequency-band mode between the office end and the subscriber end, and terminating the training if it succeeds.

Wherein in step d, if the training fails in the three-frequency-band mode, judge whether the training times out; if timeout, returning to step a, otherwise returning to step c to continue the training in the three-frequency-band mode.

In step e, if the training fails in the four-frequency-band mode, judge whether the training times out; if timeout, returning to step a, otherwise returning to step e to continue the training in the four-frequency-band mode.

The two-frequency-band mode comprises the uplink frequency band and a downlink frequency band of 0.138MHz∼3.75MHz;
the symmetric three-frequency-band mode comprises the uplink frequency band, a downlink frequency band of 0.138MHz∼3.75MHz and a uplink frequency band of 3.75MHz∼8.5MHz;
the asymmetric three-frequency-band mode comprises the uplink frequency band, a downlink frequency band of 0.138MHz∼3.75MHz and a uplink frequency band of 3.75MHz∼5.2MHz;
the four-frequency-band mode comprises the uplink frequency band, a downlink frequency band of 138KHz~3750KHz, a uplink frequency band of 3.75MHz~8.5MHz and a downlink frequency band of 8.5MHz~12MHz.

When the transmission range between the office end and the subscriber end is short, the transmission is performed at a rate of conventional VDSL; and when the transmission range between the office end and the subscriber end is long, the transmission is performed at a rate similar to the asymmetric digital subscriber line (ADSL).

A same type of modem is used at the subscriber end for both the short range and the long range transmission.

The present invention takes full advantage of the frequency band of 25KHz∼138KHz as the uplink frequency band, and implements adaptive a low or high rate for a short or long range through the training between the office end and the subscriber end: in the case of a short range (below 1.5km), the transmission is performed at a normal VDSL rate; in the case of a long range (above 1.5km), the transmission is performed at a rate similar to ADSL; and the same type of modem is used in both cases. Therefore, the method proposed in the present invention can cover the application fields of existing ADSL and VDSL, and be applicable to different applications with the same modem, thereby greatly reducing maintenance cost of different modems for the operators. On the other hand, the present invention integrates the advantages of long range and asymmetric bandwidth in ADSL and high rate and relatively symmetric bandwidth in VDSL, and unifies such contradictory features in the same technology, so as to customize different features and services for different applications and to further facilitate the operators to provide various services.

Furthermore, in prior art, in order to provide two access rates of a low rate for a long range and a high rate for a short range through one digital subscriber line access multiplexer (DSLAM) and hereby to provide different services, service cards for both ADSL and VDSL shall be provided at the same time, that is so-called "A/V Mixed-and-Plugged DSLAM", resulting in a more complex system and an increased equipment cost. However, with the method proposed in the present invention, the service cards for ADSL and VDSL can be replaced by the LRVDSL service card, which can makes the system simpler and reduce the equipment cost.

### Brief Description of the Drawings

Fig.1 is a schematic diagram of the allocation of VDSL frequency bands specified by the International Telecom Union (ITU);
Fig.2 is a schematic diagram of the allocation of VDSL frequency bands in P.R.China;
Fig.3 illustrates that the frequency band of 25KHz∼138KHz shown in Fig.1 is used as the uplink frequency band according to the embodiment of the present invention;
Fig.4 illustrates that the frequency band of 25KHz∼138KHz shown in Fig.2 is used as the uplink frequency band according to the embodiment of the present invention;
Fig.5 shows the four-frequency-band mode according to the embodiment of the present invention;
Fig.6 shows the symmetric three-frequency-band mode according to the embodiment of the present invention;
Fig.7 shows the asymmetric three-frequency-band mode according to the embodiment of the present invention;
Fig.8 shows the two-frequency-band mode according to the embodiment of the present invention;
Fig.9 is a block diagram of systematic architecture according to the embodiment of the present invention;
Fig.10 is a flow diagram of training for the office end and the subscriber end according to the embodiment of the present invention;
Fig.11 shows the comparison between the embodiment of the present invention and the prior art; and
Fig.12 is a schematic diagram of choosing a LRVDSL frequency band mode for training according to the embodiment of the present invention.

### Detailed Description of the Embodiments

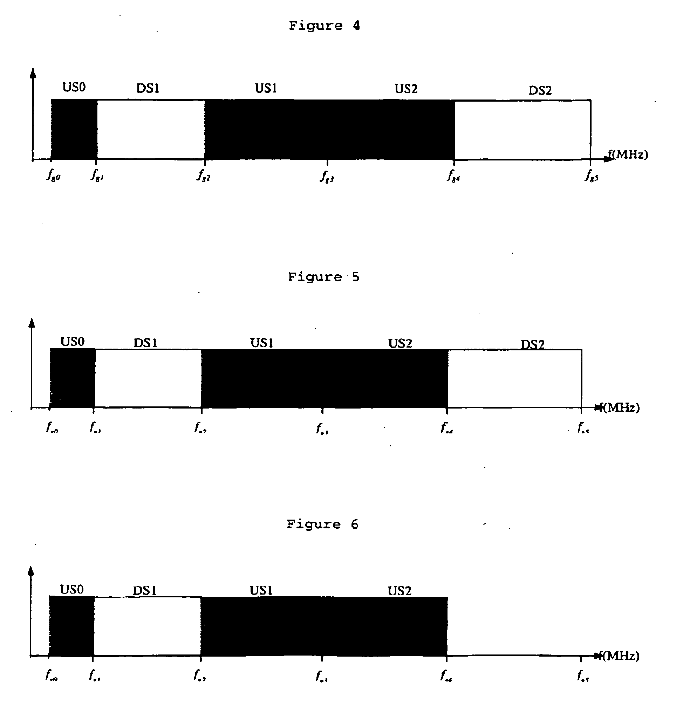

The preferable embodiment for the present invention takes full advantage of the frequency band of 25KHz∼138KHz which is used as the uplink (US) frequency band, based upon those standard VDSL frequency bands. The specific allocation of frequency bands is shown in Fig.3, in which the frequency band of 25KHz∼138KHz is defined as the uplink frequency band (US0). In view of the VDSL industry standard in China, the specific allocation of frequency bands is shown in Fig.4 and the following table:

| Frequency Band Scheme/MHz | f_{g0} | f_{g1} | f_{g2} | f_{g3} | f_{g4} | f_{g5} |
|---|---|---|---|---|---|---|
| LRVDSL | 0.025 | 0.138 | 3.75 | 5.2 | 8.5 | 12.0 |

In the above scheme, there is a tradeoff among the following three principles:
(1) High rate for a short range: if the twisted pair line is short enough (e.g., below 500m), the analog bandwidth of the downlink frequency band DS1 (138KHz~3.75MHz), the uplink frequency band US1 and the uplink frequency band US2 (3.75MHz∼8.5MHz) can be used to achieve high rate. In such a two-frequency-band mode, a symmetric transmission rate up to 25Mbps can be achieved. In the case of a four-frequency-band mode, the uplink frequency band US0, the downlink frequency band DS1, the uplink frequency band US1, the uplink frequency band US2 and the downlink frequency band DS2 can be used, and the transmission rate can be even as high as 50Mbps or above.
(2) Low rate for a long range: if the twisted pair line is relatively long (e.g., above 1500m), the analog frequency band of the uplink frequency band US1, the uplink frequency band US2 and the downlink frequency band DS2 will be unavailable, and the only uplink frequency band US0 and the downlink frequency band DS1 will be available, because the signal is continuously attenuated along the twisted pair lines (the higher the carrier frequency is, the faster the attenuation is). Thus in that case, a link with a relatively low transmission rate can be set up in the long range. Due to the fact that the uplink frequency band US0 has an analog bandwidth of only about 100KHz, the uplink rate is relatively low, i.e. about 500Kbps, while the downlink rate can be up to about 25Mbps depending on the range or will be similar to that of ADSL, i.e. 3.8Mbps. However, the transmission range herein can be extended to about 3,000m, which is desirable to most applications.
(3) Switchable between a long range and a short range: the technology for long range digital subscriber line (DSL) has developed ADSL, while the technology for short range has developing VDSL. If the long range VDSL technology (referred to as LRVDSL) incorporates the features of ADSL and VDSL, i.e. it achieves both low rate for a long range and high rate for a short range, it can not only meet the independent demands for ADSL and VDSL but also provide the demand for providing a data transmission bandwidth to the fullest extent depending upon actual conditions of the lines.

Since the frequency band used for a short range is different from that for a long range, the uses of the frequency bands in different cases are described as follows.

As shown in Fig.5, the four-frequency-band mode comprises the uplink frequency band US0, the downlink frequency band DS1, the uplink frequency band US1, the uplink frequency band US2 (US1 and US2 can be combined into a single uplink frequency band) and the downlink frequency band DS2. The frequency band mode is suitable for the case of 300m or shorter twisted pair lines. Since it employs two analog frequency bands of the downlink frequency band DS1 and the downlink frequency band DS2, the downlink rate can be up to about 50Mbps.

As shown in Fig.6, the symmetric three-frequency-band mode comprises the uplink frequency band US0, the downlink frequency band DS1, the uplink frequency band US1 and the uplink frequency band US2 (US1 and US2 can be combined into a single uplink frequency band). The three-frequency-band mode is suitable for the case of 800m or shorter twisted pair lines. A symmetric transmission rate up to 25Mbps can thus be achieved.

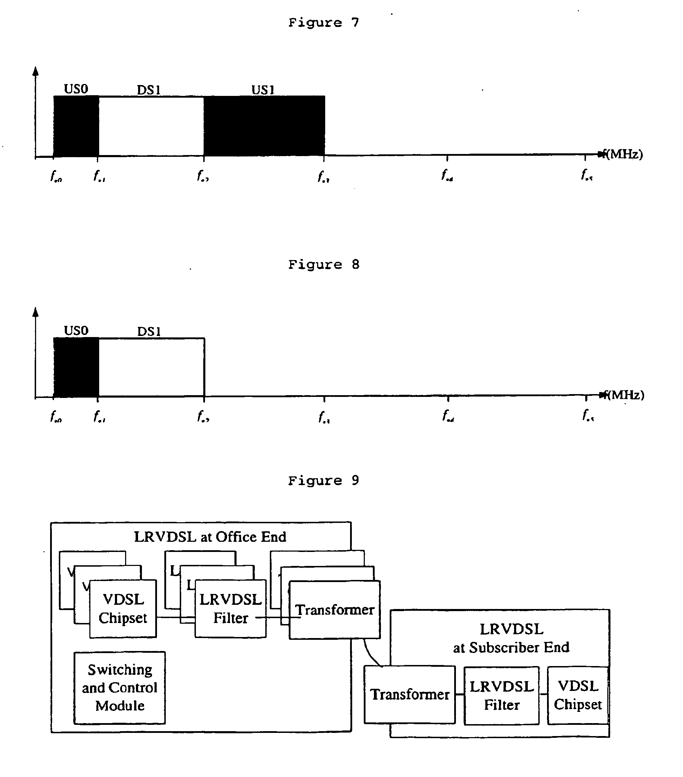

As shown in Fig.7, the asymmetric three-frequency-band mode comprises the uplink frequency band US0, the downlink frequency band DS1 and the uplink frequency band US1, which is suitable for the case of 1500m or shorter twisted pair lines. Both a downlink transmission rate of 16~25Mbps and an uplink transmission rate of 4~10Mbps can be achieved.

As shown in Fig.8, the two-frequency-band mode comprises the uplink frequency band US0 and the downlink frequency band DS1, which is suitable for the case of 1500m or longer twisted pair lines. Both the uplink rate is 300~500Kbps, while the downlink is 1∼10Mbps with a longest transmission distance of about 4000m.

In current VDSL technology, both Quadrature Amplitude Modulation (QAM) mode and Discrete Multi-Tone (DMT) modulation mode support an adjustable feature for a signal carrier frequency. For VDSL in QAM mode, it is sufficient to set each carrier frequency of the uplink and downlink and to make them conform to the definition of frequency bands for LRVDSL through allocating the frequency bands with a filter. For VDSL in DMT mode, LRVDSL can also be implemented alike. In practice, the LRVDSL system shown in Fig.9 can be consisted of a VDSL chipset in QAM or DMT mode in combination with an external or built-in-chip filter.

The office end of the system comprises a switching and control module, a LRVDSL filter a VDSL chipset, etc. The filter is used to allocate the frequency bands, and it can be a passive filter external to the chipset comprising resistors, capacitors and inductors or an analog or digit filter built in the chipset. The subscriber end comprises a transformer, a LRVDSL filter, a VDSL chipset, etc. A line training between the office end and the subscriber end is implemented by the switching and control module cooperative with the VDSL chipset.

Similar to VDSL, the training process of LRVDSL and the transmission of information on the lines are also made through the VDSL overhead control (VOC) and the embedded operating channels (EOC), complying with relevant standards (see relevant definitions in ITU-T G. 993.1 and the standard of VDSL telecom industry in P.R.China (YD/T 1239-2002)).

For achieving LRVDSL, the principle for the line-training process is "Begin with the most robust mode, and step up the rate until the demand is met". The training is started as to two lowest frequency bands, and then as to three or even four frequency bands, that is called an increment-by-frequency-band and increment-by-rate training. Of course, the training pattern can also be customized as required by different customers.

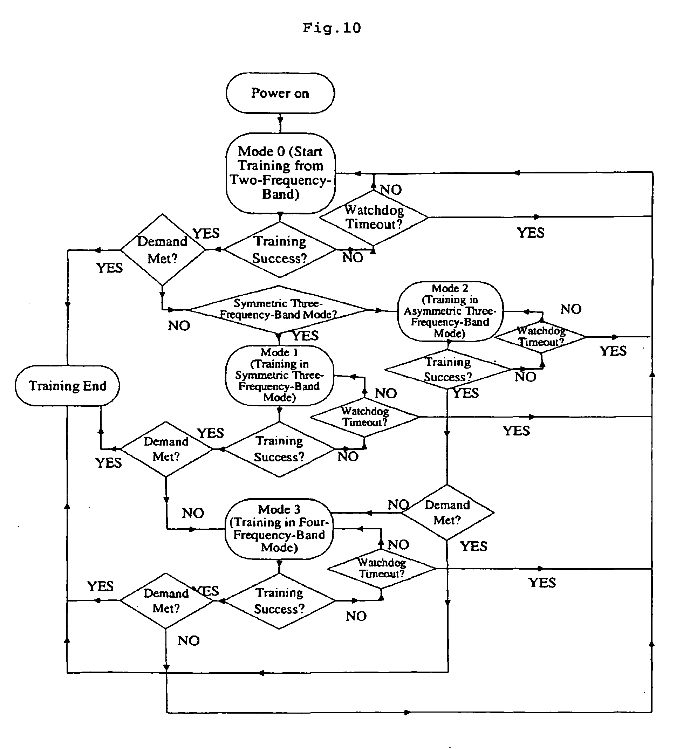

As shown in Fig. 10, the training process of LRVDSL is as follows.

Step 1: the switching and control module at the office end imitates a line-training instruction to the VDSL chip at the office end (i.e. a VDSL port at the office end), and the VDSL chip starts the training from Mode 0 of the two-frequency-band. Through the EOC channel , the remote end responds to the training request from the office end, and performs a series of setting of line parameters, including the setting of frequency bands, through the same step with the office end (i.e. in the same process as the office end).

Step 2: if the training fails, return to step 1 so as to continue the training in the two-frequency-band mode; if the training is successful, judge whether the subscriber's demand is met based upon parameters indicative of the line quality, such as line rate, SNR or the like.); if met, go to step 7, otherwise go to step 3.

Step 3: the symmetric or asymmetric three-frequency-band mode is chosen for the training between the office end and the subscriber end.

Step 4: if the training fails, i.e. either the office end or the remote end is unable to complete the training and the watchdog is timeout, go to step 2 under the action of the watchdog circuit; if the watchdog isn't timeout, return to step 3 so as to continue the training;
if the training is successful, judge whether the subscriber's demand is met based upon parameters indicative the line quality, such as line rate, SNR or the like; if met, go to step 7, otherwise go to step 5.

Step 5: the training is performed in the four-frequency-band mode between the office end and the subscriber end.

Step 6: if the training fails, i.e. either the office end or the remote end is unable to complete the training and the watchdog is timeout, go to step 2 under the action of the watchdog circuit; if the watchdog isn't timeout, return to step 5 so as to continue the training in the four-frequency-band mode;
if the training is successful, go to step 7.

Step 7: both the office end and the subscriber end complete the training through the same process, then the activation of the remote end by the office end is finished, and LRVDSL is established.

In step 4 and step 6, if the training fails, the frequency band in which the training fails will be recorded; during the process of the increment-by-frequency-band training that starts again from the two-frequency-band mode, the frequency band in which the training fails and those frequency bands above this one will not be involved in the training.

The same type of modem is used at the subscriber end both for a short distance and a long distance transmission.

The performance indexes of VDSL, ADSL and LRVDSL are compared in the following table (Note: in view of the diversity of specific implementations, the indexes are only for reference).

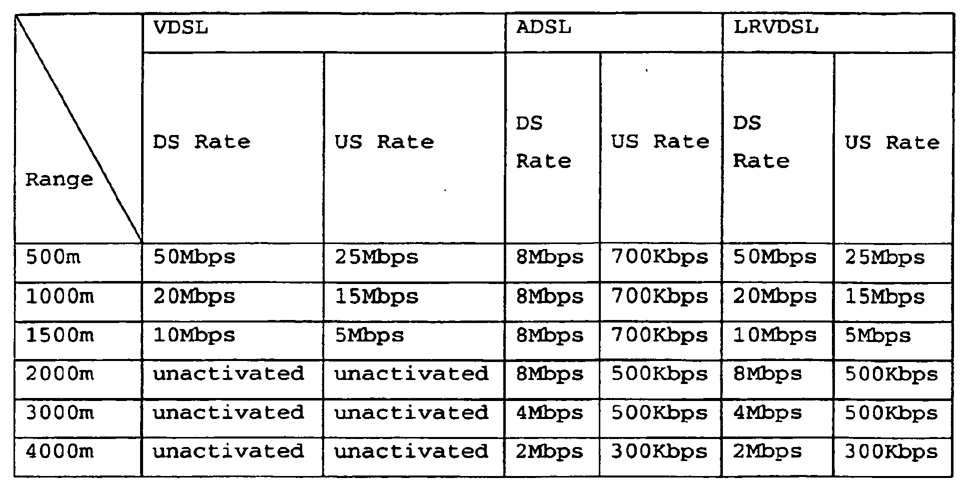

Compared to other xDSL technologies, such as ADSL, the transmission range of VDSL is relatively shorter: only a transmission range of 1500m or so can be achieved on twisted pair lines of 0.4mm (which is the majority of twisted pair lines laid in P.R.China). Beyond the distance of 1.5km, VDSL may not only provide a precipitate transmission rate but even can't be activated. The main reason is that the signal attenuation in the high frequency bands is so quick.

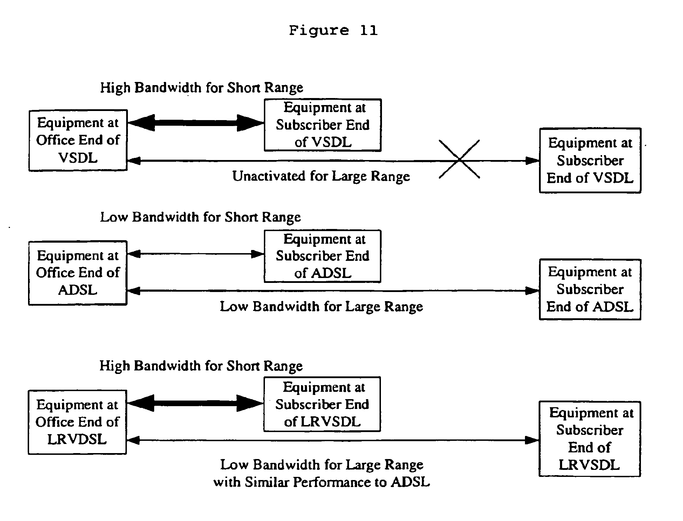

As shown in Fig.11, the drawback of VDSL is being unactivated for a long range, while the drawback of ADSL is being unable to increase the low rate for a short range. In contrast, LRVDSL can overcome the above two drawbacks and incorporate the advantages of VDSL and ADSL (VDSL: high rate for a short range; and ADSL: activable at a low rate for a long range) to implement activation, connection and transmission of a digital subscriber line in a long range. Therefore, it can greatly extend the application range of VDSL and have a significant practical value.

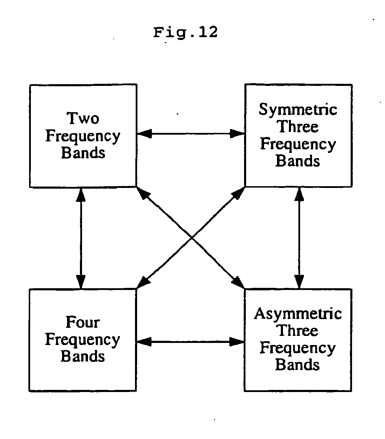

Training patterns other than the incremental training starting from the two-frequency-band can also be used for the LRVDSL training process described in the embodiment of the present invention. Fig.12 shows that the training process is a closed-loop one, which can start from any one of the two-frequency-band, the symmetric three-frequency-band, the asymmetric three-frequency-band and the four-frequency-band, and can be terminated in any of these modes. For example, the training process can start from the four-frequency-band mode, and try the three-frequency-band mode in the case of the failed four-frequency-band. However, an essential principle is that selections from the frequency bands are various. Thanks to the various allocations from the frequency bands, an applicable allocation of the frequency bands can be determined for LRVDSL depending upon actual line conditions, so as to complete both a training at a low transmission rate in the case of a long range and a training at a high transmission rate in the case of a short range. Compared with the allocation pattern of mono-frequency-band for ADSL or VDSL, the allocation pattern of the frequency bands for LRVDSL can have an advantage of more flexibility, and the training modes switchable from one to another can achieve an optimal match between the line rate and the line conditions.

## Claims

1. A method of implementing a long range very-high-rate digital subscriber line, VDSL, comprising steps of:
defining an only uplink frequency band (US0) among VDSL frequency bands, and combining the uplink frequency band (US0) with at least one rest frequency band into long range VDSL frequency band modes; performing a training in the long range VDSL frequency band modes based upon actual conditions of a line between an office end and a subscriber end; and
setting up a link between the office end and the subscriber end at a maximum transmission rate which succeeds in the training,
wherein the long range VDSL frequency band modes comprise a two-frequency-band mode, a symmetric three-frequency-band mode, an asymmetric three-frequency-band mode and a four-frequency-band mode, **characterized in that** a frequency band of 0.025MHz~0.138Mhz is defined as the uplink frequency band and the training is performed in an increment-by-frequency-band way and increment-by-rate manner, wherein the increment-by-frequency-band and increment-by-rate training between the office end and the subscriber end comprises steps of:
a. performing the training in the two-frequency-band mode between the office end and the subscriber end;
b. if the training fails, returning to step a, otherwise judging whether parameters indicative of quality of the line meet the subscriber's demand; if the subscriber's demand is met, terminating the training, otherwise going to step c;
c. performing the training in the three-frequency-band mode between the office end and the subscriber end;
d. if the training succeeds, judging whether the parameters indicative of quality of the line meet the subscriber's demand; if the subscriber's demand is met, terminating the training, otherwise going to step e;
e. performing the training in the four-frequency-band mode between the office end and the subscriber end, and terminating the training if it succeeds.

2. The method of claim 1, wherein in step d, if the training fails in the three-frequency-band mode, judge whether the training times out; if timeout, returning to step a, otherwise returning to step c to continue the training in the three-frequency-band mode.

3. The method of claim 1, wherein in step e, if the training fails in the four-frequency-band mode, judge whether the training times out; if timeout, returning to step a, otherwise returning to step e to continue the training in the four-frequency-band mode.

4. The method of any one of claims 1-3, wherein:
the two-frequency-band mode comprises the uplink frequency band (US0) and a downlink frequency band of 0.138MHz~3.75MHz (DS1);
the symmetric three-frequency-band mode comprises the uplink frequency band (US0) a downlink frequency band of 0.138MHz~3.75MHz (DS1) and a uplink frequency band of 3.75N4Hz~8.5NIHz (US2);
the asymmetric three-frequency-band mode comprises the uplink frequency band (US0) a downlink frequency band of 0.138MHz~3.75MHz (DS1) and a uplink frequency band of 3.75MHz∼5.2MHz (US1); and
the four-frequency-band mode comprises the uplink frequency band (US0) a downlink frequency band of 138KHz∼3750KHz (DS1), a uplink frequency band of 3.75MHz∼8.5MHz (US2) and a downlink frequency band of 8.5MHz∼12MHz (DS2).

5. The method of claim 1, wherein when the transmission range between the office end and the subscriber end is short, the transmission is performed at a rate of conventional VDSL; and when the transmission range between the office end and the subscriber end is long, the transmission is performed at a rate similar to the asymmetric digital subscriber line (ADSL).

6. The method of claim 5, wherein a same type of modem is used at the subscriber end for the transmission between the office end and the subscriber end.

## Patentansprüche

1. Verfahren zur Implementation einer digitalen Teilnehmerleitung mit sehr hoher Bitrate, VDSL, für große Entfernungen, folgende Schritte umfassend:
Definieren eines Frequenzbandes nur für Uplink (US0) in den VDSL-Frequenzbändern und Kombinieren des Uplink-Frequenzbandes (US0) mit mindestens einem restlichen Frequenzband in VDSL-Frequenzband-Modi für große Entfernungen; Durchführen eines Trainings in den VDSL-Frequenzband-Modi für große Entfernungen auf der Basis tatsächlicher Bedingungen einer Leitung zwischen einer Vermittlungsstelle und einem Teilnehmer; und
Einrichten einer Verbindung zwischen der Vermittlungsstelle und dem Teilnehmer mit einer maximalen Übertragungsrate, die im Training erfolgreich war,
wobei die VDSL-Frequenzband-Modi für große Entfernungen einen Modus mit zwei Frequenzbändern, einen symmetrischen Modus mit drei Frequenzbändern, einen asymmetrischen Modus mit drei Frequenzbändern und einen Modus mit vier Frequenzbändern umfassen, **dadurch gekennzeichnet, dass** ein Frequenzband von 0,025 MHz - 0,138 MHz als Uplink-Frequenzband definiert wird und das Training auf eine Art des frequenzbandweisen Inkrementierens und ratenweisen Inkrementierens durchgeführt wird, wobei das Training des frequenzbandweisen Inkrementierens und ratenweisen Inkrementierens zwischen der Vermittlungsstelle und dem Teilnehmer folgende Schritte umfasst:
a. Durchführen des Trainings im Modus mit zwei Frequenzbändern zwischen der Vermittlungsstelle und dem Teilnehmer;
b. wenn das Training fehlschlägt, Rückkehr zu Schritt a, andernfalls Beurteilung, ob Parameter, welche die Qualität der Leitung anzeigen, die Anforderungen des Teilnehmers erfüllen; wenn die Anforderungen des Teilnehmers erfüllt werden, Beenden des Trainings, andernfalls weiter bei Schritt c;
c. Durchführen des Trainings im Modus mit drei Frequenzbändern zwischen der Vermittlungsstelle und dem Teilnehmer;
d. wenn das Training erfolgreich ist, Beurteilung, ob die Parameter, welche die Qualität der Leitung anzeigen, die Anforderungen des Teilnehmers erfüllen; wenn die Anforderungen des Teilnehmers erfüllt werden, Beenden des Trainings, andernfalls weiter bei Schritt e;
e. Durchführen des Trainings im Modus mit vier Frequenzbändern zwischen der Vermittlungsstelle und dem Teilnehmer, und Beenden des Trainings, wenn es erfolgreich war.

2. Verfahren aus Anspruch 1, wobei in Schritt d, wenn das Training im Modus mit drei Frequenzbändern fehlschlägt, beurteilt wird, ob eine Zeitüberschreitung des Trainings vorliegt; wenn eine Zeitüberschreitung des Trainings vorliegt, Rückkehr zu Schritt a, andernfalls Rückkehr zu Schritt c, um das Training im Modus mit drei Frequenzbändern fortzusetzen.

3. Verfahren aus Anspruch 1, wobei in Schritt e, wenn das Training im Modus mit vier Frequenzbändern fehlschlägt, beurteilt wird, ob eine Zeitüberschreitung des Trainings vorliegt; wenn eine Zeitüberschreitung des Trainings vorliegt, Rückkehr zu Schritt a, andernfalls Rückkehr zu Schritt e, um das Training im Modus mit vier Frequenzbändern fortzusetzen.

4. Verfahren aus einem beliebigen der Ansprüche 1-3, wobei:
der Modus mit zwei Frequenzbändern das Uplink-Frequenzband (US0) und ein Downlink-Frequenzband von 0,138 MHz - 3,75 MHz (DS1) umfasst;
der symmetrische Modus mit drei Frequenzbändern das Uplink-Frequenzband (US0), ein Downlink-Frequenzband von 0,138 MHz - 3,75 MHz (DS1) und ein Uplink-Frequenzband von 3,75 MHz - 8,5 MHz (US2) umfasst;
der asymmetrische Modus mit drei Frequenzbändern das Uplink-Frequenzband (US0), ein Downlink-Frequenzband von 0,138 MHz - 3,75 MHz (DS1) und ein Uplink-Frequenzband von 3,75 MHz - 5,2 MHz (US1) umfasst; und
der Modus mit vier Frequenzbändern das Uplink-Frequenzband (US0), ein Downlink-Frequenzband von 138 kHz - 3750 kHz (DS1), ein Uplink-Frequenzband von 3,75 MHz - 8,5 MHz (US2) und ein Downlink-Frequenzband von 8,5 MHz - 12 MHz (DS2) umfasst.

5. Verfahren aus Anspruch 1, wobei, wenn die Übertragungsentfernung zwischen der Vermittlungsstelle und dem Teilnehmer kurz ist, die Übertragung mit einer Rate des herkömmlichen VDSL durchgeführt wird; und wenn die Übertragungsentfernung zwischen der Vermittlungsstelle und dem Teilnehmer lang ist, die Übertragung mit einer Rate durchgeführt wird, die der asymmetrischen digitalen Teilnehmerleitung (ADSL) ähnlich ist.

6. Verfahren aus Anspruch 5, wobei beim Teilnehmer derselbe Typ von Modem für die Übertragung zwischen der Vermittlungsstelle und dem Teilnehmer benutzt wird.

## Revendications

1. Procédé de mise en oeuvre d'une ligne d'abonné numérique à très haut débit VDSL à longue distance, comprenant les étapes suivantes :
définition d'une bande de fréquence uniquement ascendante (US0) parmi des bandes de fréquence VDSL et combinaison de la bande de fréquence ascendante (US0) avec au moins une bande de fréquence restante pour constituer des modes de bande de fréquence VDSL à longue distance ;
réalisation d'un apprentissage des modes de bande de fréquence VDSL à longue distance basé sur les conditions actuelles d'une ligne entre une extrémité opérateur et une extrémité abonné ; et
établissement d'une liaison entre l'extrémité opérateur et l'extrémité abonné à un débit de transfert maximum survenant durant l'apprentissage,
dans lequel les modes de bande de fréquence VDSL à longue distance comprennent un mode à double bande de fréquence, un mode symétrique à triple bande de fréquence, un mode asymétrique à triple bande de fréquence et un mode à quadruple bande de fréquence,
**caractérisé en ce qu'**une bande de fréquence de 0,025 MHz à 0,138 MHz est définie en tant que bande de fréquence ascendante et **en ce que** l'apprentissage est exécuté par incrémentation de bande de fréquence et par incrémentation de débit, l'apprentissage par incrémentation de bande de fréquence et incrémentation de débit entre l'extrémité opérateur et l'extrémité abonné comprenant les étapes suivantes :
a. réalisation de l'apprentissage dans le mode à double bande de fréquence entre l'extrémité opérateur et l'extrémité abonné ;
b. si l'apprentissage échoue, retour à l'étape a, sinon, évaluation pour établir si les paramètres indicateurs de la qualité de la ligne répondent à la demande de l'abonné ; si la demande de l'abonné est satisfaite, fin de l'apprentissage, sinon, aller à l'étape c ;
c. réalisation de l'apprentissage dans le mode à triple bande de fréquence entre l'extrémité opérateur et l'extrémité abonné ;
d. si l'apprentissage réussit, évaluation pour établir si les paramètres indicateurs de la qualité de la ligne répondent à la demande de l'abonné ; si la demande de l'abonné est satisfaite, fin de l'apprentissage, sinon, aller à l'étape e ;
e. réalisation de l'apprentissage dans le mode à quadruple bande de fréquence entre l'extrémité opérateur et l'extrémité abonné et finalisation de l'apprentissage s'il réussit.

2. Procédé selon la revendication 1 dans lequel, à l'étape d du procédé, si l'apprentissage échoue en mode triple bande de fréquence, une évaluation est réalisée pour établir si le temps d'apprentissage est écoulé; si ce temps est écoulé, retour à l'étape a, sinon, retour à l'étape c pour continuer l'apprentissage en mode triple bande de fréquence.

3. Procédé selon la revendication 1 dans lequel, à l'étape e du procédé, si l'apprentissage échoue en mode quadruple bande de fréquence, une évaluation est réalisée pour établir si le temps d'apprentissage est écoulé ; si ce temps est écoulé, retour à l'étape a, sinon, retour à l'étape e pour continuer l'apprentissage en mode quadruple bande de fréquence.

4. Procédé selon l'une quelconque des revendications 1 à 3 dans lequel :
le mode à double bande de fréquence comprend une bande de fréquence ascendante (US0) et une bande de fréquence descendante de 0,138 MHz à 3,75 MHz (DS1) ;
le mode symétrique à triple bande de fréquence comprend la bande de fréquence ascendante (US0), une bande de fréquence descendante de 0,138 MHz à 3,75 MHz (DS1) et une bande de fréquence ascendante de 3,75 MHz à 8,5 MHz (US2) ;
le mode asymétrique à triple bande de fréquence comprend la bande de fréquence ascendante (US0), une bande de fréquence descendante de 0,138 MHz à 3,75 MHz (DS1) et une bande de fréquence ascendante de 3,75 MHz à 5,2 MHz (US1) ; et
le mode à quadruple bande de fréquence comprend la bande de fréquence ascendante (US0), une bande de fréquence descendante de 13 8 KHz à 3.750 KHz (DS1), une bande de fréquence ascendante de 3,75 MHz à 8,5 MHz (US2) et une bande de fréquence descendante de 8,5 MHz à 12 MHz (DS2).

5. Procédé selon la revendication 1 dans lequel, lorsque la portée de transmission entre l'extrémité opérateur et l'extrémité abonné est courte, la transmission est exécutée au débit d'un VDSL conventionnel ; et lorsque la portée de transmission entre l'extrémité opérateur et l'extrémité abonné est longue, la transmission est exécutée à un débit similaire à celui d'une ligne d'abonné numérique asymétrique (ADSL).

6. Procédé selon la revendication 5 dans lequel un même type de modem est utilisé à l'extrémité abonné pour la transmission entre l'extrémité opérateur et l'extrémité abonné.
